**Europäisches Patentamt**

**European Patent Office**

**Office européen des brevets**

(19)

(11) Veröffentlichungsnummer: **0 172 243**
**B1**

## (12) EUROPÄISCHE PATENTSCHRIFT

(45) Veröffentlichungstag der Patentschrift:
**12.07.89**

(21) Anmeldenummer: **85901398.9**

(22) Anmeldetag: **15.02.85**

(86) Internationale Anmeldenummer:
**PCT/EP 85/00051**

(87) Internationale Veröffentlichungsnummer:
**WO 85/03747 (29.08.85 Gazette 85/19)**

(51) Int. Cl.⁴: **F 16 B 12/30, F 16 B 7/18**

(54) **ROHR MIT VERBINDUNGSELEMENT.**

(30) Priorität: **17.02.84 DE 3405631**

(43) Veröffentlichungstag der Anmeldung:
**26.02.86 Patentblatt 86/9**

(45) Bekanntmachung des Hinweises auf die Patenterteilung:
**12.07.89 Patentblatt 89/28**

(84) Benannte Vertragsstaaten:
**AT BE CH DE FR GB LI LU NL SE**

(56) Entgegenhaltungen:
**FR-A-2 495 293**
**US-A-4 005 561**

(73) Patentinhaber: **HAHN, Hermann, Hausnr. 51, D-8871 Rechbergreuthen (DE)**

(72) Erfinder: **HAHN, Hermann, Hausnr. 51, D-8871 Rechbergreuthen (DE)**

(74) Vertreter: **Ott, Elmar, Dipl.- Ing., Kappelstrasse 8, D-7240 Horb 1 (DE)**

## Beschreibung

Die Erfindung bezieht sich auf ein Rohr mit Verbindungselement, entsprechend dem Oberbegriff des Anspruches 1.

Das Verbinden mehrerer Rohre zu einem Traggestell oder einem Gerüst kann durch Verschweißen oder Verschrauben erfolgen. Der Zusammenbau eines Rohrgestelles mittels Schweißverbindungen erfordert einen hohen Zeit- und Arbeitsaufwand. Außerdem können die Oberflächen eines geschweißten Gestelles erst nach dem Schweißen mit Farbe gestrichen werden. Eine industrielle Vorfertigung verchromter Stahlrohre ist im Zusammenhang mit dieser Art des Zusammenbaus nicht möglich.

Die Verbindung zweier oder mehrerer Rohre kann auch mittels Schraubverbindungen erfolgen. Zu diesem Zweck können an den Enden der Rohre Flansche angeformt sein, die Bohrungen für die Aufnahme von Schrauben aufweisen. Derartige Flanschverbindungen sind in der Herstellung und bezüglich des späteren Zusammenbaus sehr aufwendig.

Die Verbindung zweier Vierkantrohre kann auch dadurch erfolgen, daß die Seitenwände der Rohre Durchgangsbohrungen aufweisen, in die lange Schrauben eingesetzt werden, welche jeweils die beiden miteinander zu verbindenden Rohre durchdringen. Am Schraubenende wird eine Mutter so fest angezogen, daß sich die beiden Rohre verspannen. Derartige Schraubverbindungen sind zwar einfach, aber sie weisen nur eine sehr geringe Stabilität auf. Starken mechanischen Belastungen, bei denen ständig Lastwechsel auftreten, halten diese Verbindungen nicht stand. Die Wandungen des Hohlprofils geben nach, wodurch sich die Schraubverbindungen lockern. Wegen der begrenzten Elastizität des Materials lassen sich diese Verbindungen nicht beliebig oft nachspannen.

Aus der FR-A-2 495 243 ist ein Rohr mit Verbindungselement bekannt geworden, bei dem ein Verbindungselement an einem Ende des Rohres für eine Schraubverbindung angeordnet ist. Das Verbindungselement ist ein quer angeordneter Wendabschnitt, der besonders hohen Zugkräften, die in der Längsrichtung des Rohres angreifen, nicht standhält. Der Wandabschnitt kann nämlich bei hohen Zugkräften deformiert werden, wodurch sich auch nachträglich eine Lockerung der Verbindung ergeben kann.

Der Erfindung liegt die Aufgabe zugrunde, ein Rohr mit einem Verbindungselement zu schaffen, mit dem auf möglichst einfache Weise stark belastbare Verbindungen möglich sind und mit dem stabile Gerüste oder Gestelle herstellbar sind.

Die Lösung dieser Aufgabe wird bei einem Rohr der eingangs genannten Gattung durch die im Anspruch 1 angegebenen Merkmale erhalten. Das Verbindungselement besteht vorzugsweise aus einem Wandabschnitt, an dessen nach außen gerichteter Stirnseite ein Gewindebolzen oder Gewindestab angeschweißt ist. Der Wandabschnitt ist für die rechtwinklige Verbindung von im Querschnitt rechteckigen Rohren diagonal im Rohr angeordnet und ist mit diesem verschweißt. Die Stirnseite des Wandabschnittes verläuft vorzugsweise in der gleichen Ebene wie das zugehörige Rohrende.

Eine Weiterbildung der Erfindung sieht vor, daß das mih dem Verbindungselement bestückte Ende des Rohres abgeschrägt ist, daß der Wandabschnitt entsprechend abgeschrägt und parallel zu den abgeschrägten Seitenwänden des Rohres in das Rohr eingesetzt ist, und daß die Mittelachse des Gewindeelementes senkrecht zum abgeschrägten Rohrende verläuft. Auf diese Weise läßt sich eine stabile Verbindung auch bei nicht rechtwinklig angeordneten Rohren erreichen. Ein am abgeschrägten Ende überstehender Gewindeabschnitt kann in eine Bohrung eines zweiten Rohres eingesetzt und mittels einer Mutter mit diesem verschraubt werden.

Zur Erhöhung der Stabilität des jeweils verwendeten Rohres ist weiterhin vorgesehen, daß der Wandabschnitt eine innere Trennwand bildet, die sich über die gesamte Länge des Rohres erstreckt. Handelt es sich bei dem Rohr um ein im Querschnitt rechteckiges Rohr, so erhält dieses Rohr vorzugsweise eine diagonale Trennwand, an deren Enden auch beidseitig Gewindeelemente - Muttern oder Gewindestäbe - angeordnet sein können.

Eine besonders stabile Verbindung zwischen zwei beispielsweise senkrecht zueinander verlaufenden Rohren erhält man dadurch, daß für die Verschraubung als Unterlagsscheibe eine Unterlagsplatte verwendet wird, die an den Rohrquerschnitt angepaßt ist. Dadurch erhält man eine gleichmäßige Kraftverteilung und eine sichere, kraftschlüssige Verbindung zwischen den zu verbindenden Rohren.

Vorteilhafte Weiterbildungen der Erfindung sind in den übrigen Unteransprüchen gekennzeichnet.

Die Erfindung wird nachfolgend anhand der Zeichnungen näher erläutert. Es zeigen:

Fig. 1    eine perspektivische Ansicht der Stirnseite eines Rohres mit Verbindungslement,

Fig. 2 und Fig. 3    Ansichten der Stirnseite des Rorhres mit Verbindungselementen,

Fig. 4    ein Ausführungsbeispiel mit senkrecht zueinander verlaufenden Rohren,

Fig. 5 und Fig. 6    zwei Befestigungsmöglichkeiten für die Verbindung zwischen Gewindestab und zugehörigem Wandabschnitt,

Fig. 7    ein Ausführungsbeispiel einer verbindung zweier im spitzen Winkel zueinander verlaufenden Rohre und

Fig. 8    ein weiteres Verbindungselement mit einer Mutter.

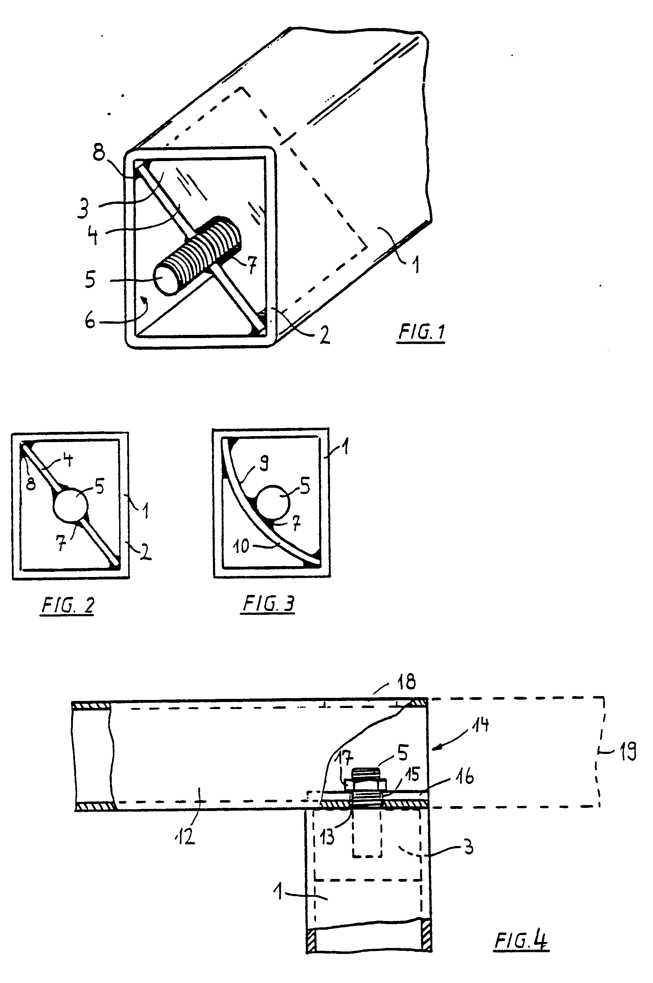

Das in Fig. 1 dargestellte Ausführungsbeispiel zeigt ein im Querschnitt rechteckig ausgebildetes Rohr 1, an dessen Stirnseite 2 ein Verbindungselement 3 eingesetzt ist. Das Verbindungselement besteht aus einem diagonal angeordneten Wandabschnitt 4, in dessen Mitte stirnseitig ein Gewindestab 5 angeordnet ist. Der Gewindestab 5 ist mit dem Wandabschnitt 4 und dieser wiederum mit der Innenwandung 6 des Rohres 1 verschweißt. Die entsprechenden Schweißnähte 7, 8 sind in der Zeichnung dargestellt. Das Verbindungselement 3 wird auf diese Weise äußerst fest mit dem Rohr 1 verbunden.

Bei dem Rohr 1 kann es sich um ein Stahlrohr und bei dem Wandabschnitt 4 um eine Stahlplatte gleicher Wandstärke handeln. Da sich diese Stahlplatte nur über einen Abschnitt im Inneren des Rohres 1 erstreckt und somit einen Abschnitt einer inneren Trennwand bildet, wird hier von einem Wandabschnitt 4 gesprochen.

In Fig. 2 ist die Stirnseite des in Fig. 1 dargestellten Rohres 1 vereinfacht dargestellt. Die hier eingetragenen Bezugszahlen entsprechen in ihrer Bedeutung denen von Fig. 1.

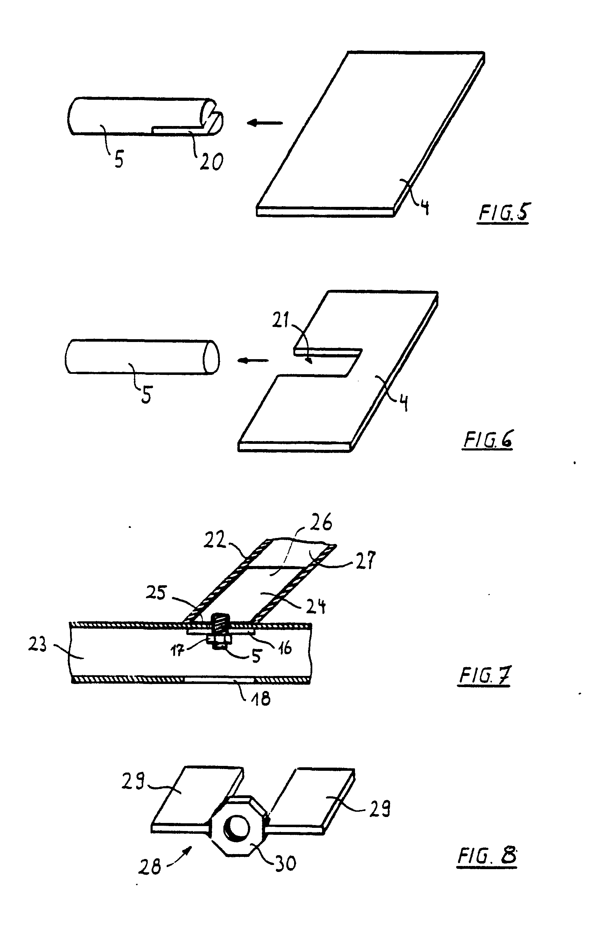

In Fig. 3 ist die Stirnseite eines Rohres 1 mit einem Verbindungselement 9 dargestellt, dessen Wandabschnitt 10 gekrümmt ist.

Die Figuren 2 und 3 zeigen zwei der möglichen rechteckigen Ausführungsformen.

Fig. 4 zeigt eine Ausführungsform, bei der zwei senkrecht zueinander verlaufende Rohre 1 und 12 kraftschlüssig miteinander verbunden sind. Das in das Rohr 1 eingesetzte Verbindungselement 3 ragt mit seinem Gewindestab 5 in das Innere des Rohres 12. Das Rohr 12 besitzt eine Bohrung 13, in die der Gewindestab 5 des Rohres 1 eingesteckt wurde. Dann wurde von der offenen Seite 14 des Rohres 12 eine mit einer Bohrung 15 versehene Platte 16 auf den Gewindestab 5 aufgeschoben und dann mit einer Schraubenmutter 17 befestigt. Die Platte 16 kann auch als Unterlagsplatte bezeichnet werden, da sie eine vergrößerte Unterlagsscheibe für die Schraubenmutter 17 bildet.

Die Schraubenmutter 17 kann mit entsprechendem Werkzeug von der Öffnung 14 aus angezogen werden. Es besteht aber auch die Möglichkeit, eine geeignete Montagebohrung 18 vorzusehen, durch die ein Steckschlüssel auf die Schraubenmutter 17 aufgesteckt werden kann. Diese Montagebohrung 18 ist insbesondere dann erforderlich, wenn das Rohr 12 nicht nur auf der linken Seite, sondern auch auf der rechten Seite übersteht, was mit unterbrochenen Linien 19 angedeutet ist.

Die Platte 16 ist im Querschnitt an den Querschnitt des Rohres 1 angepaßt, wobei selbstverständlich auch die Innenabmessungen des Rohres 12 zu berücksichtigen sind. Durch diese Platte 16 wird eine günstige Kraftverteilung auf die Stirnseite des Rohres 1 bewirkt, wodurch sich eine besonders stabile Verbindung zwischen den beiden Rohren 1 und 12 ergibt. In Versuchen wurde diese Verbindungsart mit hohen Kräften und ständigen Lastwechseln belastet, wobei es sich gezeigt hat, daß auch bei sehr starken Beanspruchungen ein Lockern oder Lösen der Verbindung nicht erfolgt.

Die Figuren 5 und 6 zeigen zwei mögliche Verbindungsarten zwischen dem Wandabschnitt 4 und dem daran befestigten Gewindestab 5. Der in Fig. 5 dargestellte Gewindestab ist mit einem der Wandstärke des Wandabschnittes 4 entsprechenden Schlitz 20 versehen, in den der Wandabschnitt 4 in der angegebenen Pfeilrichtung eingeschoben und anschließend mit dem Gewindestab 5 verschweißt wird.

In Fig. 6 ist ein Wandabschnitt 4 vorgesehen, der eine an den Durchmesser des Gewindestabes 5 angepaßte Aussparung 21 aufweist. Auch hier wird der Gewindestab 5 mit dem Wandabschnitt 4 verschweißt.

Wie Fig. 7 zeigt, kann auch eine Verbindung zwischen zwei Rohren 22 und 23 erfolgen, bei denen das eine Rohr 22 im Bereich des Verbindungselementes 24 eine abgeschrägte Stirnseite 25 hat. Der Wandabschnitt 26 des Verbindungselementes 24 verläuft in dem hier dargestellten, im Querschnitt rechteckig ausgebildeten Rohr 22 parallel zur Seitenwand 27. Der stirnseitig befestigte Gewindestab 5 tritt senkrecht an der abgeschrägten Stirnseite 25 hervor und ragt in das Rohr 23. Im übrigen kann die Verbindung zwischen dem Rohr 22 und dem Rohr 23 wie bei dem in Fig. 4 dargestellten Ausführungsbeispiel ausgebildet sein. Auch hier kann eine Montagebohrung 18 vorgesehen sein.

In Fig. 8 ist ein Verbindungselement 28 dargestellt, welches aus zwei Wandabschnitten 29 besteht, zwischen die eine Schraubenmutter 30 eingeschweißt ist. Auf diese Weise erhält man ein Verbindungselement 28, welches beispielsweise als Gegenstück zu dem Verbindungselement 3 (Fig. 1) verwendet werden kann. Unter Verwendung eines der Verbindungselemente 3 und 28 können zwei Rohre stirnseitig miteinander verschraubt werden.

Um eine weitere Erhöhung der Stabilität im Bereich des Verbindungselementes zu erhalten, kann das Verbindungselement zwei Kreuzweise angeordnete Wandabschnitte haben, in deren Kreuzungspunkt der Gewindestab 5 angeordnet ist. Die Wandabschnitte verlaufen dann, bei Verwendung in einem Vierkantrohr, entlang der beiden Diagonalen.

## Patentansprüche

1. Rohr mit Verbindungselement, welches wenigstens an einem Ende des Rohres für eine Schraubverbindung in das Rohr eingesetzt ist, dessen Verbindungselement (3, 9, 24, 28) aus wenigstens einem Wandabschnitt (4, 10, 26, 28) und einem mit diesem starr verbundenen Gewindeelement (5, 30) besteht, wobei der Wandabschnitt (4, 10, 26, 28) mit der Innenwandung (6) des Rohres (1, 11, 22) verschweißt ist und das Gewindeelement (5, 30) senkrecht an der Stirnseite (2, 25) des Rohres (1, 11, 22) herausragt, dadurch gekennzeichnet, daß das Rohr (1) ein Vierkantrohr ist, bei dem der Wandabschnitt (4), in dessen Mitte das Gewindeelement angeordnet ist, entlang einer der beiden Diagonalen verläuft.

2. Rohr nach Anspruch 1, dadurch gekennzeichnet, daß das mit dem Verbindungselement (24) bestückte Ende des Rohres (22) abgeschrägt ist, daß der Wandsbschnitt (26) entsprechend abgeschrägt und parallel oder senkrecht zu den abgeschrägten Seitenwänden (27) des Rohres in das Rohr (22) eingesetzt ist, und daß die Mittelachse des Gewindeelementes senkrecht zum abgeschrägten Rohrende verläuft.

3. Rohr nach einem der vorhergehenden Ansprüche, dadurch gekennzeichnet, daß der Wandabschnitt (4, 10, 26) eine innere Trennwand bildet, die sich über die gesamte Länge des Rohres (1, 11, 22) erstreckt.

4. Rohr nach einem der vorhergehenden Ansprüche, dadurch gekennzeichnet, daß als Gewindeelement ein Gewindestab (5) oder eine Schraubenmutter (30) im Bereich einer Stirnseite des Wandabschnitts (4, 29) mit diesem verschweißt ist.

5. Rohr nach Anspruch 4, dadurch gekennzeichnet, daß der Gewindestab (5) an dem dem Wandabschnitt (4) zugewandten Ende geschlitzt und auf den Wandabschnitt (4) aufgesteckt ist.

6. Rohr nach Anspruch 4, dadurch gekennzeichnet, daß die Schraubenmutter (30) zwischen zwei Wandabschnitte (29) eingesetzt und mit diesen verschweißt ist.

7. Rohr nach einem der vorhergehenden Ansprüche, dadurch gekennzeichnet, daß das Rohr (12, 23) wenigstens eine Bohrung (13) aufweist, in die das als Gewindestab (5) ausgebildete Gewindeelement eines zweiten Rohres (1, 22) einsetzbar ist.

8. Rohr nach Anspruch 7, dadurch gekennzeichnet, daß auf den in das zweite Rohr (12, 23) hineinragende Gewindestab (5) eine an den Rohrquerschnitt angepaßte Unterlagsplatte (16) aufgesteckt und mittels einer Schraubenmutter (17) an die Innenwandung des zweiten Rohres (12, 23) gepreßt ist.

9. Rohr nach Anspruch 1, dadurch gekennzeichnet, daß das Verbindungselement (3) zwei kreuzweise angeordnete Wandabschnitte besitzt.

## Claims

1. Tube having a connecting element which is inserted, for a threaded connection, into the tube at least at one end of the tube, the connecting element (3, 9, 24, 28) of the tube comprising at least one wall portion (4, 10, 26, 29) and one threaded element (5, 30) rigidly connected to the wall portion, the wall portion (4, 10, 26, 29) being welded to the inside wall (6) of the tube (1, 11, 22) and the threaded element (5, 30) projecting perpendicularly from the end face (2, 25) of the tube (1, 11, 22), characterised in that the tube (1) is a rectangular tube in which the wall portion (4), in the middle of which the threaded element is arranged, extends along one of the two diagonals.

2. Tube according to claim 1, characterised in that the end of the tube (22) that is equipped with the connecting element (24) is bevelled, that the wall portion (26) is correspondingly bevelled and is inserted into the tube (22) parallel or perpendicular to the bevelled side walls (27) of the tube, and that the central axis of the threaded element extends perpendicularly to the bevelled end of the tube.

3. Tube according to any one of the preceding claims, characterised in that the wall portion (4, 10, 26) forms an inner partition wall that extends over the entire length of the tube (1, 11, 22).

4. Tube according to any one of the preceding claims, characterised in that, as the threaded element, a threaded rod (5) or a nut (30) is welded to the wall portion (4, 29) in the region of one end face of the latter.

5. Tube according to claim 4, characterised in that the threaded rod (5) is slotted at the end facing the wall portion (4) and is fitted over the wall portion (4).

6. Tube according to claim 4, characterised in that the nut (30) is inserted between two wall portions (29) and welded thereto.

7. Tube according to any one of the preceding claims, characterised in that the tube (12, 23) has at least one bore (13) into which the threaded element, in the form of a threaded rod (5), of a second tube (1, 22) is insertable.

8. Tube according to claim 7, characterised in that a washer (16) that matches the cross-section of the tube is placed over the threaded rod (5) projecting into the second tube (12, 23) and pressed by means of a nut (17) against the inside wall of the second tube (12, 23).

9. Tube according to claim 1, characterised in that the connecting element (3) has two wall portions arranged in the manner of a cross.

## Revendications

1. Tube comportant un élément de liaison, ou raccord, qui est placé, sur au moins une extrémité du tube, dans ce tube pour un assemblage par vissage et dont le raccord (3, 9, 24, 28) consiste en au moins un tronçon (4, 10, 26, 29) de paroi et en un élément fileté (5, 30) qui lui est assujetti, le tronçon (4, 10, 26, 29) de paroi étant soudé à la paroi intérieure (6) du tube (1, 11, 22) et l'élément fileté (5, 30) faisant saillie perpendiculairement au côté frontal (2, 25) du tube (1, 11, 22), caractérisé en ce que le tube (1) est un tube quadrangulaire dans lequel le tronçon (4) de paroi, au milieu duquel l'élément fileté est disposé, est placé le long d'une des deux diagonales de ce tube.

2. Tube selon la revendication 1, caractérisé en ce que l'extrémité du tube (22), équipée du raccord (24), est chanfreinée ou inclinée, en ce que le tronçon (26) de paroi est chanfreiné de manière correspondante et est placé dans le tube (22) parallèlement ou perpendiculairement aux parois latérales (27) chanfreinées ou inclinées du tube, et en ce que l'axe médian de l'élément fileté est perpendiculaire à l'extrémité chanfreinée du tube.

3. Tube selon l'une des revendications précédentes, caractérisé en ce que le tronçon (4, 10, 26) de paroi forme une cloison séparatrice interne, qui s'étend sur la totalité de la longueur du tube (1, 11, 22).

4. Tube selon l'une des revendications précédentes, caractérisé en ce que lui est soudé, comme élément fileté, une tige filetée (5) ou un écrou (30), dans la zone d'un côté frontal du tronçon (4, 29) de paroi.

5. Tube selon la revendication 4, caractérisé en ce que la tige filetée (5) est fendue sur l'extrémité tournée vers le tronçon (4) de paroi et est enfilée sur le tronçon (4) de paroi.

6. Tube selon la revendication 4, caractérisé en ce que l'écrou (30) est placé entre deux tronçons (29) de paroi et leur est soudé.

7. Tube selon l'une des revendications précédentes, caractérisé en ce que le tube (12, 23) présente au moins un perçage (13), dans lequel l'élément fileté, en forme de tige filetée (5), d'un second tube (1, 22) peut être inséré.

8. Tube selon la revendication 7, caractérisé en ce que, sur la tige filetée (5) pénétrant dans le second tube (12, 23), est placée une plaquette (16) d'appui, adaptée à la section du tube et qui est serrée à l'aide d'un écrou (17) sur la paroi interne du second tube (12, 23).

9. Tube selon la revendication 1, caractérisé en ce que le raccord (3) possède deux tronçons de paroi disposés en croix.

_FIG.1_

_FIG. 2_

_FIG. 3_

_FIG.4_

FIG.5

FIG.6

FIG.7

FIG.8